# EUROPEAN PATENT SPECIFICATION

(11) **EP 1 157 916 B1**
(45) Date of publication and mention of the grant of the patent: **26.10.2005**
(21) Application number: 01303838.5
(22) Date of filing: 26.04.2001
(51) Int. Cl.: B62D 29/00

(54) **Devices and methods for reinforcing hollow structural members**
Vorrichtungen und Verfahren zur Verstärkung von geschlossenen, konstruktiven Bauelementen
Dispositifs et méthodes pour renforcer des éléments structurels creux

(30) Priority: 26.04.2000 JP 2000126169
(43) Date of publication of application: 28.11.2001
(73) Proprietor: NEO-EX LAB. INC., Toyota-shi, Aichi-ken (JP)
(72) Inventor: Matsuki, Nobuaki, Nisshin-shi, Aichi-ken (JP); Iwamoto, Katsutoshi, Okazaki-shi, Aichi-ken (JP)
(74) Representative: Senior, Alan Murray

(56) References cited:
- WO-A-97/43501
- WO-A-99/48746
- US-A- 6 003 274

## Description

### Background of the Invention

### 1. Field of the Invention

The present invention relates to devices and structures for reinforcing a hollow structural member. More particularly, the present invention relates to devices and structures for reinforcing a closed box-like hollow structural member constructed from two or more plates, such as a front pillar, a center pillar, a quarter pillar, a roof side panel or a rocker panel of a vehicle. Preferably, the reinforcing device increases the strength and rigidity of the hollow structural member.

### 2. Description of the Related Art

In order to reinforce a hollow structural member (for example, a front pillar of a vehicle), a reinforcement device may be disposed within a cavity of the hollow structural member. Such a reinforcement device may be an elongated member that is arranged within the cavity in such a way as to extend along a longitudinal direction of the hollow structural member. A known reinforcement device is taught, for example, by Japanese Laid-open Patent Publication Number 10-53156.

Reinforcement devices are also known that are integrally formed by injection molding, extrusion molding, blow molding or other such processes, so as to have lightweight and high rigidity. However, it is difficult to integrally form the reinforcement device if the device has a complicated longitudinal cross-sectional configuration or if the device has a transverse cross-sectional shape that changes along the longitudinal direction of the hollow structural member. For example, the reinforcement device may be substantially hollow, so that the reinforcement device is lightweight. However, support structures may be provided within the hollow portion in order to impart rigidity and strength to the reinforcement device. In the known art, such reinforcement devices are constructed from a plurality of reinforcement device parts that are separately manufactured. After separately forming the individual reinforcement device parts, these parts are joined or attached by screws, mechanical fasteners or welding. However, such a construction can be labor intensive and costly.

US-A-6003274 discloses a device and a method according to the preamble of claims 1 and 7, for use in the automotive industry for filling a hollow pillar for reinforcing purposes. One form of the device in question (Fig. 10) discloses a pair of metal U-shaped channel section members which are placed back-to-back and connected by means of adhesively-attached foamable material which can be activated by the application of external heat applied so as to swell the foamable material to cause the assembly of the two channels to press against the interior of the pillar.

### Summary of the Invention

It is, accordingly, an object of the present teachings to provide improved reinforcement devices and methods for reinforcing hollow structural members. Preferably one or more problems associated with the known art can be significantly reduced or eliminated.

Several reinforcing devices are taught in the present specification. One aspect of the present invention provides an apparatus as defined in claim 1. In one embodiment of the present teachings, the adhesive resin material essentially comprises one or more adhesive thermosetting resins that will thermoset when heated. Thus, the reinforcement device may include the reinforcement parts that are connected by a thermoset adhesive product. In another embodiment of the present teachings, the adhesive resin material also may have the property of foaming or expanding when heated. In this embodiment, the adhesive resin material also may have the desirable effect of securing the reinforcement device within the hollow structural member after heating due to the expansion of the adhesive resin material.

According to the present teachings of the first aspect, two or more elongated reinforcement parts may be attached or bonded by a thermoset product that is produced from said adhesive resin material. That is, the reinforcement parts can be securely bonded by simply heating the adhesive resin material to produce the thermoset product. Therefore, the reinforcement device can be easily and speedily produced. Further, the reinforcement device may impart rigidity and strength to the hollow structural member.

Another aspect of the present invention provides a method as defined in claim 7. In an embodiment of the present teachings, the adhesive resin material also may foam or expand when heated, which may have the desirable effect of securing the reinforcement device within the hollow structural member.

The present teachings will become more fully apparent from the following description and claims as it proceeds in connection with the drawings.

### Brief Description of the Drawings

FIG. 1 is a perspective view of a reinforcement device that is designed to reinforce a hollow structural member according to a first representative embodiment of the present teachings before a first reinforcement part is attached or bonded to a second reinforcement part;
FIG. 2(A) is an explanatory view of the reinforcement device of FIG. 1, which view illustrates the relative positions of the first and second reinforcement parts before being coupled using adhesive connecting rods;
FIG. 2(B) is an explanatory view similar to FIG. 2(A), which view illustrates the relative positions of the first and second reinforcement parts before being coupled using adhesive connecting rods;
FIG. 3 is a side view of the reinforcement device of FIG. 2(B) positioned within the hollow structural member;
FIG. 4 is a cross-sectional view taken along line IV-IV in FIG. 3;
FIG. 5 is a cross-sectional view similar to FIG. 4 after the adhesive connecting rods have been expanded or foamed;
FIG. 6(A) is an enlarged fragmentary cross-sectional view of the reinforcement device according to a modification of the first representative embodiment before the adhesive connecting rods have been expanded or foamed;
FIG. 6(B) is a cross-sectional view similar to FIG. 6(A) after the connecting rods have been expanded or foamed;
FIG. 7 is a cross-sectional view of a reinforcement device according to a second representative embodiment of the present teachings;
FIG. 8(A) is an enlarged fragmentary cross-sectional view of a reinforcement device according to a modification of the second representative embodiment before the fasteners have been expanded or foamed; and
FIG. 8(B) is a cross-sectional view similar to FIG. 8(A) after the fasteners have been expanded or foamed.

### Detailed Description of the Preferred Embodiments

Preferred embodiments of the invention will now be described in detail with reference to the drawings.

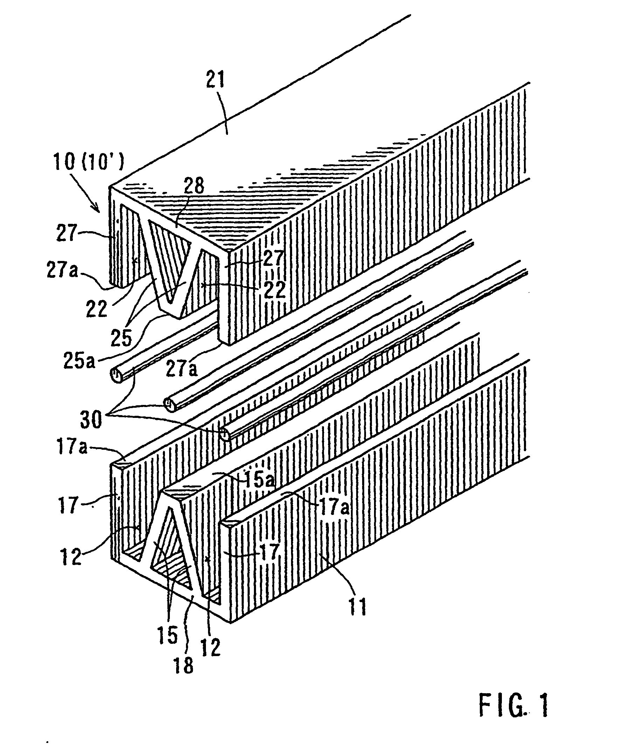

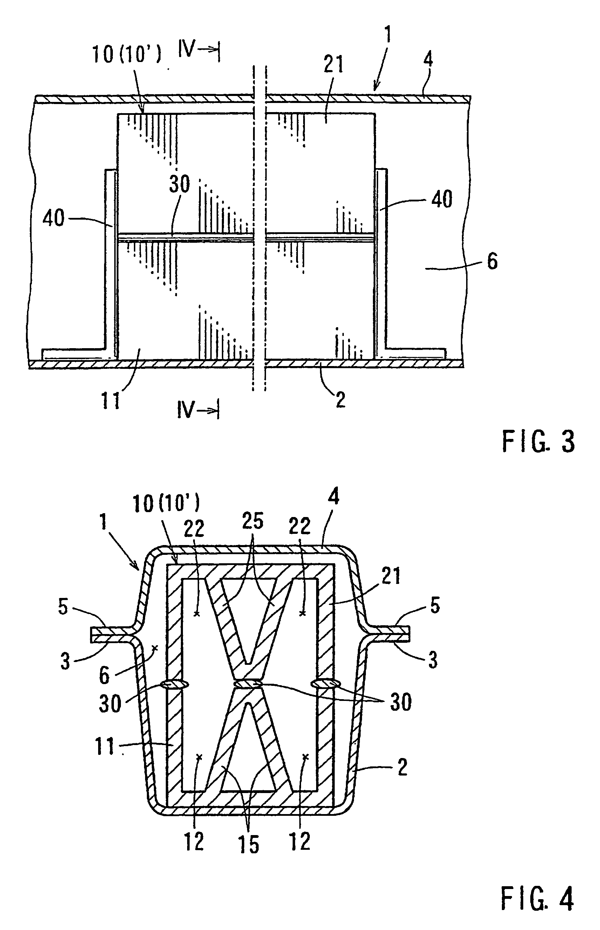

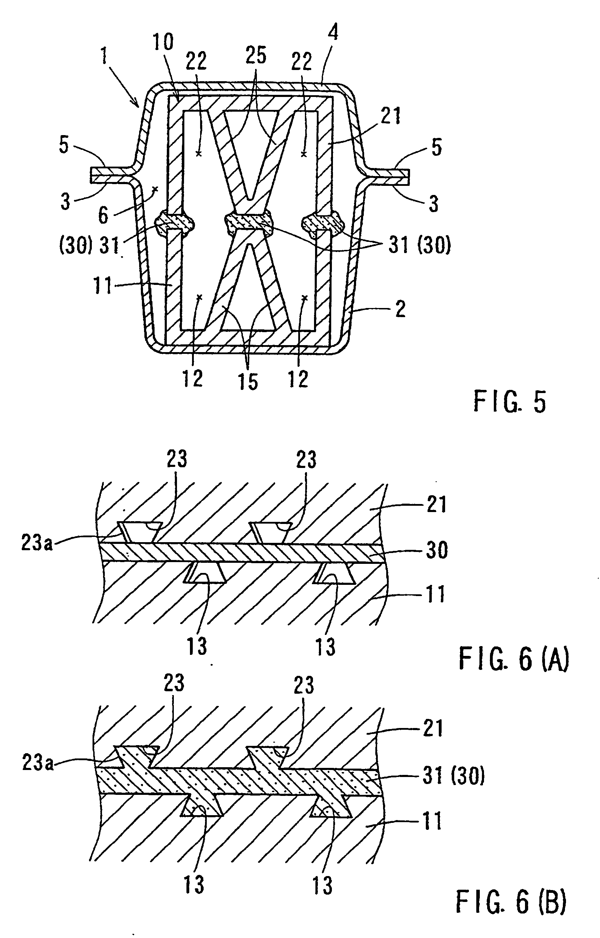

A first detailed representative embodiment is shown in FIGS. 1 to 5. As shown in FIGS. 3-5, a pillar 1 of a vehicle body is exemplified as a hollow structural member. For example, the pillar 1 may be a center pillar or a front pillar of a vehicle body, although naturally a variety of hollow structural members are contemplated by the present teachings. As best shown in FIGS. 4 and 5, the pillar 1 is constructed from an elongated inner pillar panel 2, which has flanges 3 extending along the edges of the panel 2, and an elongated outer pillar panel 4, which has flanges 5 extending along the edges of the panel 4. The inner pillar panel 2 and outer pillar panel 4 preferably are spot welded along flanges 3 and 5, although other attaching methods and means may be utilized. Thus, the pillar 1 has an elongated closed box-like hollow shape and a longitudinally extending cavity 6 is defined within pillar 1.

The cavity 6 preferably is constructed to receive an elongated reinforcement device 10 or an intermediate reinforcement device 10' that extends along the longitudinal direction of the pillar 1. The reinforcement device 10, 10' preferably reinforces the pillar 1 in order to provide strength and rigidity to the pillar 1. As best shown in FIG. 1, the reinforcement device 10 (or the intermediate reinforcement device 10') may include, for example, a U-shaped first or lower reinforcement device part 11 that has side walls 17 and a bottom wall 18. A U-shaped second or upper reinforcement device part 21 also may be provided and also may have side walls 27 and a bottom wall 28. Each of the first part 11 and the second part 21 has a supplemental wall 15, 25, respectively. Preferably, the supplemental walls 15, 25 longitudinally extend along the respective bottom walls 18, 28. The supplemental walls 15, 25 are designed to impart strength and rigidity to the parts 11, 21 without adding a significant amount of weight. Thus, the interior portions of parts 11, 21 may be substantially hollow in order to minimize the weight of the reinforcement device 10, 10'. In this embodiment, the supplemental walls 15, 25 have a substantially triangular cross-section when viewed with the respective bottom walls 18, 28, although the supplemental walls 15, 25 may have other shapes that impart strength and rigidity to the parts 11, 21.

Parts 11, 21 preferably are integrally formed from heat resistive hard synthetic resinous materials. Known techniques may be utilized to manufacture parts 11, 21, such as injection molding, extrusion molding, blow molding or other such processes. Preferably, the outer dimensions of the parts 11, 21 are designed to substantially correspond to the interior dimensions of the cavity 6. While parts 11, 21 both preferably comprise a resinous material, one (or both) of parts 11, 21 may comprise a metal, such as light metals or their alloys, for example, aluminum alloys. In addition, the parts 11, 21 can be formed from different types of metals that cannot be easily be welded to each other, if desired, because the parts 11, 21 will be connected by an adhesive fastener to form the reinforcement device 10, 10'.

End surfaces 17a, 27a, 15a, 25a, i.e. mating surfaces, are formed on the respective side walls 17, 27 and the supplemental walls 15, 25. Preferably, the first and second reinforcement parts 11, 21 are designed so that the side wall end surfaces 17a and the supplemental wall end surfaces 15a face the corresponding side wall end surfaces 27a and the corresponding supplemental wall end surfaces 25a. Thus, when the respective end surfaces 17a, 27a, 15a, 25a are disposed so as to face each other, connecting portions are defined between the respective end surfaces 17a, 27a, 15a, 25a. In addition, the first and second parts 11, 21 preferably are symmetrically designed. That is, parts 11, 21 preferably have the same three-dimensional configuration in cross-section. As a result, the manufacturing costs of these parts 11, 21 can be reduced, because the parts 11, 21 can be manufactured by utilizing a common molding die. However, parts 11, 21 also may naturally have non-symmetrical configurations.

The first reinforcement part 11 and the second reinforcement part 21 are temporarily attached or bonded to each other by an adhesive fastener, such as connecting rods 30 in this representative embodiment. Connecting rods 30 are preferably elongated structures and are disposed along the connecting portions between the end surfaces 17a, 15a and the corresponding end surfaces 27a, 25a. By temporarily attaching or bonding parts 11, 21 using connecting rods 30, an intermediate reinforcement device 10' is formed. Preferably, the connecting rods 30 comprise an adhesive composition that can securely couple the parts 11, 21. In another preferred embodiment, the connecting rods 30 comprise an adhesive resin material that thermosets upon heating in order to more securely bond the parts 11, 21. Herein, a thermosetting adhesive resin material is intended to mean any polymer that softens when initially heated and then hardens and condenses in bulk in order to retain a permanent shape. Generally speaking, thermosetting adhesive resin materials can not be softened or reprocessed by reheating. In a still further embodiment, the adhesive resin material preferably comprises a foamable material and the foamable material can be expanded or foamable by heating in order to produce a thermoset product 31. Thus, in one embodiment, the connecting rods 30 are heated after being disposed between parts 11, 21 in order to change the connecting rods 30 into the thermoset products 31 and thereby produce the reinforcement device 10.

Thus, adhesive resin of connecting rods 30 preferably has the property of adhering the parts 11, 21 without heating. In another aspect of the present teachings, the adhesive resin can be thermoset by heating in order to more securely adhere the parts 11, 21. In a further aspect of the present teachings, the adhesive resins also preferably are capable of foaming and expanded upon heating. If all three properties are utilized together, the connecting rods 30 may be foamed and thermoset upon heating, although adhesive resins exhibiting only one or two of the above-noted properties also may be utilized with the present teachings. Representative examples of preferred adhesive resins include, but are not limited to, epoxy resins, urethanes or other esters, phenol resins and other similar adhesive resin materials. More preferably, the adhesive resin materials of the present teachings may include (i) a co-polymer of epichlorohydrin and bisphenol A (an epoxy resin), (ii) a composition comprising phenol and formaldehyde (a phenolic resin), (iii) a composition comprising isocyanate and an alcohol (a polyurethane resin) and (iv) a composition comprising maleic anhydride, fumaric acid and glycol (an unsaturated polyester resin). The reinforcement device 10, 10' can be heated (for example, 110°C-190°C) using, e.g. an oven, for about 10-60 minutes in order to thermoset and/or foam the adhesive resin material. This heat treatment may also advantageously bake any coating materials that have been disposed on the pillar 1 and/or the vehicle body in order to impart corrosion resistance to the pillar 1 and/or vehicle body.

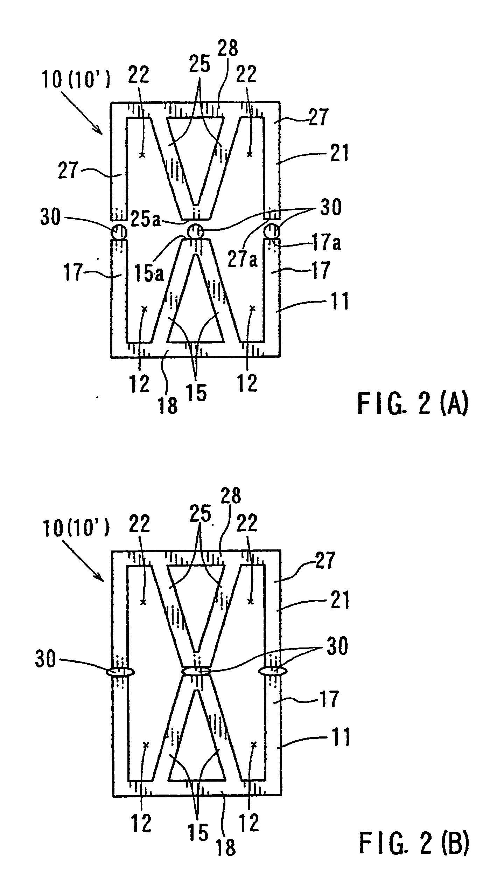

Representative methods for reinforcing the pillar 1 using the representative reinforcement device 10, 10' will now be described. In a first or preparation step, as shown in FIG. 1, the first and second reinforcement parts 11, 21 of the reinforcement device 10 are separately manufactured and comprise one or more heat resistive hard synthetic resinous materials. For example, if parts 11, 21 are symmetrical, a common molding die may be preferably utilized. Further, the adhesive connecting rods 30 are manufactured from an adhesive resin material, for example by extrusion molding. In one embodiment of the present teachings, the connecting rods 30 have substantially the same length as the reinforcement parts 11, 21. In a second or assembling step, as shown in FIGS. 2(A) and 2(B), the first and second reinforcement parts 11, 21 are disposed opposite of each in such a way that the side wall end surfaces 17a and the supplemental wall end surface 15a of the part 11 face the corresponding side wall end surfaces 27a and the corresponding supplemental wall end surface 25a of the part 21. Further, one or more connecting rods 30 are interleaved between the surfaces 17a, 15a and the corresponding surfaces 27a, 25a. Thereafter, these reinforcement parts 11, 21 may be pressed together in order to sandwich the connecting rods 30 between the surfaces 17a, 15a and the corresponding surfaces 27a, 25a. As a result, the connecting rods 30 are compressed and deformed. Further, because the connecting rods 30 have an adhesive property, the surfaces 17a, 15a will adhere to the surfaces 27a, 25a. Thus, the first and second reinforcement parts 11, 21 are attached and form the intermediate reinforcement device 10'.

In a third or mounting step, as shown in FIGS. 3 and 4, the intermediate reinforcement device 10' is longitudinally positioned on the inner plate 2 of the pillar 1. A pair of support plates 40 may be utilized to clamp or hold the reinforcement device 10' in position. However, other types of support or attaching members may be utilized to position the reinforcement device 10' within cavity 6, including for example clamps, fasteners, adhesives, clips, screws, etc. All such support or attaching members are considered to be attaching means within the present teachings. Thereafter, the inner panel 2 and the outer panels 4 are preferably welded along flanges 3 and 5 to thereby form the pillar 1. As a result, the intermediate reinforcement device 10' is appropriately arranged within the cavity 6 of the pillar 1.

Subsequently, in a fourth or heating step, the vehicle body having the pillar 1 typically is heated (e.g. using an oven) to bake any coating materials disposed on the pillar 1 and/or vehicle body. As a result, the intermediate reinforcement device 10' disposed within the cavity 6 will also be heated. If the connecting rods 30 comprise an adhesive resin material that thermosets upon heating, the connecting rods 30 will thermoset and securely adhere the parts 11, 21. If the connecting rods 30 comprise an adhesive resin material that foams or expands upon heating, the connecting rods 30 will expand during the heating step. Further, if the connecting rods 30 are capable of both thermosetting and foaming, foamed and thermoset connecting products 31 will be produced between the surfaces 17a, 15a and the corresponding surfaces 27a, 25a. As shown in FIG. 5, the first and second reinforcement parts 11, 21 may be securely attached or bonded by the connecting products 31, thereby producing the integral reinforcement device 10. As a result, the reinforcement device 10 may impart rigidity and strength to the pillar 1. In addition, the outer surface of reinforcement device 10 may tightly contact the inner surface of the cavity 6, if the connecting rod 30 expand or foam during the heating step. By tightly contacting the surface of the cavity 6, the reinforcement device 10 may impart further strength and rigidity to the pillar 1.

According to the first representative embodiment, the reinforcement device 10 can be produced by simply heating the pillar 1 after the intermediate reinforcement device 10' is introduced into the pillar cavity 6. Further, the intermediate reinforcement device 10' can be produced by simply pressing together the reinforcement parts 11, 21 with the adhesive connecting rods 30 disposed between the parts 11, 21. Therefore, the reinforcement device 10 can be easily and quickly manufactured without using additional connecting means. Further, although the first and second parts 11, 21 are symmetrically shaped in the first representative embodiment, the parts 11, 21 may be asymmetrically shaped, if desired. In addition, the cross-section of each of the parts 11, 21 may change along the longitudinal axis of the parts 11, 21. Thus, the parts 11, 21 are not required to have a uniform cross section along the entire length of the parts 11, 21.

Further, the mating surfaces 17a, 15a, 27a, 25a of the first and second parts 11, 21 can be roughened in order to increase the bonding strength between first and second parts 11, 21. In another embodiment of the present teachings, as shown in FIGS. 6(A) and 6(B), each of the surfaces 17a, 15a, 27a, 25a of the parts 11, 21 may have dovetail grooves 13, 23. Thus, if the connecting rods 30 are capable of foaming, the foamed connecting products 31 will partially enter into the grooves 13, 23, to thereby further increase the bonding strength between first and second parts 11, 21. The grooves 13, 23 may also be any type of groove that is characterized by having an opening diameter or circumference that is less than an interior diameter circumference. For example, grooves 13, 23 may also have a rounded shape or other interior shape. Thus, an inner lip or edge 23a of the groove 13, 23 is formed because the opening diameter or circumference is narrower than at least a portion of the interior diameter or circumference. Consequently, the inner lip or edge 23a may serve to retain the foamed product 31 and more reliably bond parts 11, 21.

As noted above, the connecting rods 30 also may comprise thermosetting resins that do not contain foamable materials, if desired. In such case, the connecting rods 30 will melt and thermoset, to thereby produce solid connecting products 31. Even though connecting rods 30 do not expand, the first and second reinforcement parts 11, 21 can still be securely adhered by the connecting products 31. Furthermore, the mating surfaces 17a, 15a, 27a, 25a of the parts 11, 21 may optionally include one or more longitudinally extending recesses (not shown) that serve to retain or position the connecting rods 30 before the parts 11, 21 are pressed together.

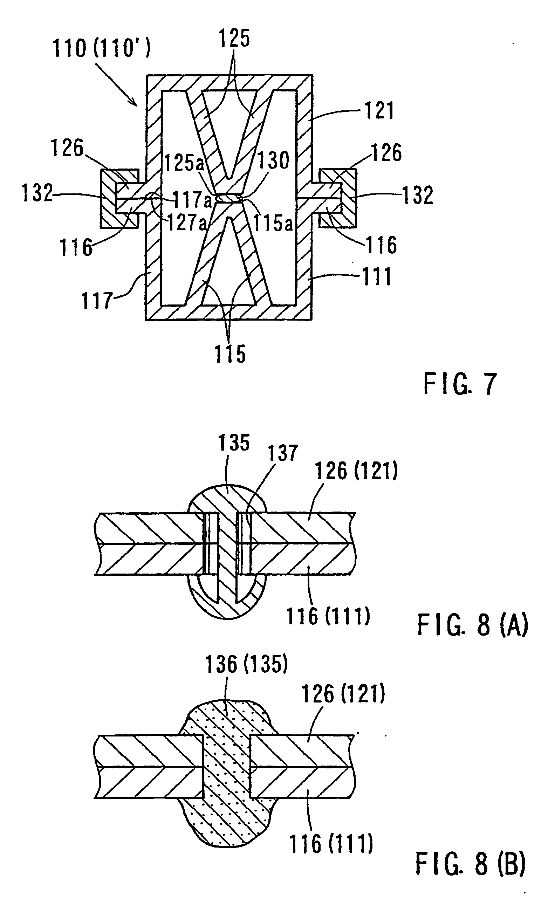

A second detailed representative embodiment of the present teachings is shown in FIG. 7 and the second detailed representative embodiment is related to the first detailed representative embodiment. Therefore, it is only necessary to describe constructions of the second detailed representative embodiment that are different from constructions described in the first detailed representative embodiment.

As shown in FIG. 7, a reinforcement device 110 or an intermediate reinforcement device 110' may include a first or lower reinforcement device part 111 that has side walls 117 and a second or upper reinforcement device part 121 that has side walls 127. The first part 111 has supplemental walls 115 and the second part 121 also preferably has supplemental walls 125.

The side walls 117, 127 may also include respective engagement projections or outward flanges 116, 126. For example, the flanges 116, 126 may be preferably constructed to adjoin each other when the first and second parts 111, 121 are placed together. Moreover, similar to the supplemental walls 15, 25 of the first representative embodiment, the supplemental walls 115, 125 also have respective end surfaces 115a, 125a, which may serve as mating surfaces when the first and second parts 111, 121 are placed together.

The second representative embodiment may further include a pair of fasteners or clamping members 132. Optionally, the clamping members 132 may comprise the same adhesive resin as the connecting rod 130, although naturally the clamping members 132 may comprise a different material. The clamping members 132 may each have a symmetrical U-shape in transverse cross section, so as to tightly fit along the adjoining flanges 116, 126. The clamping members 132 preferably are formed by injection molding, extrusion molding, blow molding or other such processes.

Representative methods for reinforcing the pillar 1 using the representative reinforcement device 110, 110' will now be described. In a preparation step, the first and second reinforcement parts 111, 121, the clamping members 132 and the connecting rod 130 are manufactured. In an assembling step, the first and second reinforcement parts 111, 121 are oppositely arranged in such a way that the flanges 116 and the supplemental wall end surfaces 115a of the part 111 face the respective flanges 126 and the supplemental wall end surface 25a of the part 121. Preferably, the connecting rod 130 is disposed or interleaved between the supplemental wall surfaces 115a, 125a. Thereafter, these reinforcement parts 111, 121 are pressed together and the connecting rod 130 is sandwiched between the surfaces 115a, 125a. Further, the flanges 116, 126 will be disposed to closely adjoin each other. Subsequently, the clamping members 132 are fitted onto the adjoined flanges 116, 126. As a result, the flanges 116, 126 are securely clamped, and the adhesive connecting rod 130 is compressed and deformed, so as to adhere the mating surfaces 115a and 125a. Thus, the first and second reinforcement parts 111, 121 are attached to each other to thereby form the intermediate reinforcement device 110'.

In a subsequent step, the intermediate reinforcement device 110' is disposed within a hollow structural member (e.g. pillar 1) and then heated in the same manner as the first representative embodiment. If the clamping members 132 and the connecting rod 130 are capable of thermosetting, thermoset clamping products and connecting products (not shown) will be produced. If the clamping members 132 and the connecting rod 130 are capable of foaming, foamed clamping products and connecting products (not shown) will be produced. Naturally, if the clamping members 132 and the connecting rod 130 are capable of thermosetting and foaming, thermoset and foamed clamping products and connecting products (not shown) will be produced. The same types of adhesive connecting rods 30 described with respect to the first representative embodiment may also be advantageously utilized in the second representative embodiment. Thus, the first and second reinforcement parts 111, 121 may be securely bonded by these products, to thereby produce the integral reinforcement device 110. Similar to the first representative embodiment, the reinforcement device 110 may impart rigidity and strength to the hollow structural member (e.g. pillar 1).

Although the connecting rod 130 is interleaved between the supplemental end wall surfaces 115a, 125a in the second representative embodiment, the connecting rod 130 can be omitted, if desired.

Also, as shown in FIG. 8(A), the clamping members 132 can be replaced with another type of fastener, such as clips 135. Moreover, clips 135 may comprise the same adhesive resin material as the connecting rod 130, although naturally clips 135 may comprise other materials. The clips 135 are preferably constructed to engage corresponding apertures 137 that are previously formed in the flanges 116, 126. As shown in FIG. 8(B), if the clips 135 comprise a thermosetting and foamable resin material, the clips 135 will expand and thermoset when heated and thereby produce foamed products 136 that close the apertures 137. Thus, the first and second reinforcement parts 111, 121 may be optionally adhered together by the foamed products 136.

Representative examples of the present invention have been described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the foregoing detail description may not be necessary to practice the invention in the broadest sense, and are instead taught merely to particularly describe detailed representative examples of the invention. Moreover, the various features taught in this specification may be combined in ways that are not specifically enumerated in order to obtain additional useful embodiments of the present teachings.

For example, although the reinforcement members comprise two reinforcement parts in the first and second representative embodiments, the present teachings are applicable to reinforcement members that comprises three or more parts. Further, the pillar of a vehicle body has been described as a representative hollow structural member. However, the hollow structural member is not limited to such pillars and may be a rocker panel, a roof side panel or other panels of a vehicle body. Moreover, the hollow structural member is not limited to parts of a vehicle body, as the present teachings are equally applicable to the reinforcement of any hollow structural members, such as for example structural components for buildings and ships.

## Claims

1. An apparatus (10, 10'; 110, 110') adapted to be inserted into a cavity (6) of a hollow structural member (1) and to reinforce the hollow structural member (1) comprising:
a first elongated reinforcement part (11, 111) having at least one mating surface (15a, 17a; 115a) extending along a longitudinal axis of the first part (11; 111),
a second elongated reinforcement part (21; 121) having at least one mating surface (25a, 27a; 125a) extending along a longitudinal axis of the second part (21; 121), and
an adhesive resin material that adheres the first elongated reinforcement part (11; 111) to the second elongated reinforcement part (21; 121),
**characterised in that** at least one of the first elongated reinforcement part (11; 111) and the second reinforcement part (21; 121) includes at least two supplemental walls (15, 25; 115, 125) that define a substantially enclosed hollow portion within the reinforcement part, so as to impart strength and rigidity to the part (11, 21: 111, 121).

2. An apparatus as defined in claim 1, wherein the adhesive resin material is an elongated connecting rod (30; 130) disposed between the mating surface (15a, 17a, 115a) extending along the longitudinal axis of the part (11, 111) and the mating surface (25a, 27a; 125a) extending along the longitudinal axis of the part (21; 121).

3. An apparatus as defined in claim 1 or claim 2, wherein the first elongated reinforcement part (111) further comprises at least one flange (116) extending along the longitudinal axis of the first part (111), the second elongated reinforcement part (121) further comprises at least one flange (126) extending along the longitudinal axis of the second part (121), and the adhesive resin material is a fastener (132, 135) coupling the flanges (116, 126).

4. An apparatus as defined in claims 1, 2 or 3, wherein the adhesive resin material comprises a thermosetting resin that thermosets when heated, whereby the reinforcement parts (11, 21; 111, 121) will be connected by a thermoset product (31; 136) after heating.

5. An apparatus as defined in any of claims 1to 4, wherein the adhesive resin material comprises a foamable resin that foams when heated, whereby the reinforcement parts (11, 21, 111, 121) will be connected by a foamed product (31; 136) after heating.

6. An apparatus as defined in any of claims 1to 5, wherein at least one of the first elongated reinforcement part (11; 111) and the second reinforcement part (21; 121) comprises a synthetic resinous material; and wherein the mating surface (15a, 17a, 115a) extending along the longitudinal axis of the first elongated reinforcement part (11; 111) and the mating surface (25a, 27a; 125a) extending along the longitudinal axis of the second elongated reinforcement part (21; 121) each comprise grooves (13, 23) having an opening circumference that is less than an interior circumference, whereby the adhesive resin material will engage a lip (23a) defined within the grooves (13, 23).

7. A method for reinforcing a hollow structural member (1), comprising the steps of:
adhering at least two elongated reinforcement parts (11, 21, 111, 121) using an adhesive resin material that comprises a thermosetting resin, thereby forming an intermediate reinforcement device (10', 110');
disposing the intermediate reinforcement device (10'; 110') within a cavity (6) defined within the hollow structural member (10); and
applying external heat to the reinforcement device (10'; 110') to activate the resin;
wherein at least one of the elongated reinforcement parts (11, 21; 111, 121) comprises a synthetic resinous material; wherein the adhesive resin material is a thermosetting resin which, when activated by the applied external heat, forms a thermoset product (31; 136) that securely bonds the reinforcement parts (11, 21; 111, 121) **characterized in that** at least one elongated reinforcement parts (11, 21; 111, 121) includes at least two supplemental walls (15, 25; 115, 125) that define a substantially enclosed hollow portion within the reinforcement part, so as to impart strength and rigidity to the part (11, 21; 111, 121).

8. A method as defined in claim 7, wherein the adhesive resin material comprises a foamable resin that foams when heated, whereby the reinforcement parts (11,21; 111, 121) are securely bonded by a foamed, thermoset product (31; 136) after heating.

## Patentansprüche

1. Vorrichtung (10, 10'; 110, 110'), die zum Einsetzen in einen Hohlraum (6) eines hohlen konstruktiven Bauelements (1) und zur Verstärkung des hohlen konstruktiven Bauelements (1) ausgeführt ist, mit
einem ersten länglichen Verstärkungsteil (11; 111) mit mindestens einer Passfläche (15a, 17a; 115a), die sich entlang einer Längsachse des ersten Teils (11; 111) erstreckt,
einem zweiten länglichen Verstärkungsteil (21; 121) mit mindestens einer Passfläche (25a, 27a; 125a), die sich entlang einer Längsachse des zweiten Teils (21; 121) erstreckt, und
einem Klebeharzmaterial, das das erste längliche Verstärkungsteil (11; 111) an das zweite längliche Verstärkungsteil (21; 121) klebt,
**dadurch gekennzeichnet, dass** das erste längliche Verstärkungsteil (11; 111) und/oder das zweite längliche Verstärkungsteil (21; 121) mindestens zwei Zusatzwände (15, 25; 115, 125) enthalten/enthält, die einen im Wesentlichen eingeschlossenen hohlen Teil im Verstärkungsteil definieren, um dem Teil (11, 21; 111, 121) Festigkeit und Steifheit zu verleihen.

2. Vorrichtung nach Anspruch 1, bei der das Klebharzmaterial eine längliche Verbindungsstange (30; 130) ist, die zwischen der sich entlang der Längsachse des Teils (11; 111) erstreckenden Passfläche (15a, 17a; 115a) und der sich entlang der Längsachse des Teils (21; 121) erstreckenden Passfläche (25a, 27a; 125a) angeordnet ist.

3. Vorrichtung nach Anspruch 1 oder 2, bei der das längliche Verstärkungsteil (111) weiterhin mindestens einen Flansch (116) umfasst, der sich entlang der Längsachse des ersten Teils (111) erstreckt, das zweite längliche Verstärkungsteil (121) weiterhin mindestens einen Flansch (126) umfasst, der sich entlang der Längsachse des zweiten Teils (121) erstreckt, und das Klebeharzmaterial ein die Flansche (116, 126) miteinander verbindendes Befestigungsmittel (132, 135) ist.

4. Vorrichtung nach Anspruch 1, 2 oder 3, bei der das Klebeharzmaterial ein wärmehärtbares Harz umfasst, das bei Erwärmung aushärtet, wodurch die Verstärkungsteile (11, 21; 111, 121) nach dem Erwärmen durch ein wärmehärtbares Produkt (31; 136) verbunden werden.

5. Vorrichtung nach einem der Ansprüche 1 bis 4, bei der das Klebeharzmaterial ein aufschäumbares Harz umfasst, das bei Erwärmung aufschäumt, wodurch die Verstärkungsteile (11, 21; 111, 121) durch ein aufgeschäumtes Produkt (31; 136) verbunden werden.

6. Vorrichtung nach einem der Ansprüche 1 bis 5, bei der das erste Verstärkungsteil (11; 111) und/oder das zweite Verstärkungsteil (21; 121) ein kunstharzartiges Material umfassen/umfasst und bei der sich die entlang der Längsachse des ersten länglichen Verstärkungsteils (11; 111) erstreckende Passfläche (15a, 17a; 115a) und die entlang der Längsachse des zweiten länglichen Verstärkungsteils (21; 121) erstreckende Passfläche (25a, 27a; 125a) jeweils Nuten (13, 23) mit einem Öffnungsumfang umfassen, der kleiner ist als ein Innenumfang, wobei das Klebeharzmaterial eine in den Nuten (13, 23) definierte Lippe (23a) in Eingriff nimmt.

7. Verfahren zur Verstärkung eines hohlen konstruktiven Bauelements (1) mit den folgenden Schritten:
Verkleben von mindestens zwei länglichen Verstärkungsteilen (11, 21; 111, 121) unter Verwendung eines Klebeharzmaterials, das ein wärmehärtbares Harz umfasst, wodurch eine Zwischenverstärkungsvorrichtung (10'; 110') gebildet wird;
Anordnen der Zwischenverstärkungsvorrichtung (10'; 110') in einen im hohlen konstruktiven Bauelement (10) definierten Hohlraum (6); und
Zuführen externer Wärme zur Verstärkungsvorrichtung (10'; 110') zur Aktivierung des Harzes;
wobei mindestens eines der länglichen Verstärkungsteile (11, 21; 111, 121) ein Kunstharzmaterial umfasst; wobei es sich bei dem Kunstharzmaterial um ein wärmeaushärtbares Harz handelt, das bei Aktivierung durch die zugeführte externe Wärme ein wärmehärtbares Produkt (31; 136) bildet, das die Verstärkungsteile (11, 21; 111,121) sicher miteinander verbindet;
**dadurch gekennzeichnet, dass** mindestens eines der länglichen Verstärkungsteile (11, 21; 111, 121) mindestens zwei Zusatzwände (15, 25; 115, 125) enthält, die einen im Wesentlichen eingeschlossenen hohlen Teil im Verstärkungsteil bilden, um dem Teil (11, 21; 111, 121) Festigkeit und Steifheit zu verleihen.

8. Verfahren nach Anspruch 7, bei dem das Kunstharzmaterial ein aufschäumbares Harz umfasst, das bei Erwärmung aufschäumt, wodurch die Verstärkungsteile (11, 21; 111, 121) nach dem Erwärmen durch ein aufgeschäumtes, wärmehärtbares Produkt (31; 136) verbunden werden.

## Revendications

1. Dispositif (10, 10' ; 110, 110') adapté pour être inséré dans une cavité (6) d'un élément structurel creux (1), et pour renforcer l'élément structurel creux (1), comportant :
une première partie de renforcement allongée (11 ; 111) ayant au moins une surface d'appariement (15a, 17a ; 115a) s'étendant le long d'un axe longitudinal de la première partie (11 ; 111),
une seconde partie de renforcement allongée (21 ; 121) ayant au moins une surface d'appariement (25a, 27a ; 125a) s'étendant le long d'un axe longitudinal de la seconde partie (21 ; 121), et
un matériau de résine adhésif qui met en adhérence la première partie de renforcement allongée (11 ; 111) sur la seconde partie de renforcement allongée (21 ; 121),
**caractérisé en ce qu'**au moins l'une parmi la première partie de renforcement allongée (11 ; 111) et la seconde partie de renforcement (21 ; 121) comporte au moins deux parois supplémentaires (15, 25 ; 115, 125) qui définissent une partie creuse sensiblement enceinte dans la partie de renforcement, de manière à imprimer une résistance et une rigidité à la partie (11, 21 ; 111, 121).

2. Dispositif selon la revendication 1, dans lequel le matériau de résine adhésif est une tige de connexion allongée (30 ; 130) disposée entre la surface d'appariement (15a, 17a ; 115a) s'étendant le long de l'axe longitudinal de la partie (11 ; 111) et la surface d'appariement (25a, 27a ; 125a) s'étendant le long de l'axe longitudinal de la partie (21 ; 121).

3. Dispositif selon la revendication 1 ou 2, dans lequel la première partie de renforcement allongée (111) comporte en outre au moins un rebord (116) s'étendant le long de l'axe longitudinal de la première partie (111), la seconde partie de renforcement allongée (121) comportant en outre au moins un rebord (126) s'étendant le long de l'axe longitudinal de la seconde partie (121), et le matériau de résine adhésif est une fixation (132, 135) couplant les rebords (116, 126).

4. Dispositif selon la revendication 1, 2 ou 3, dans lequel le matériau de résine adhésif comporte une résine thermodurcissable qui thermodurcit lorsqu'elle est chauffée, de sorte que les parties de renforcement (11, 21 ; 111, 121) vont être connectées par un produit thermodurci (31 ; 136) après chauffage.

5. Dispositif selon l'une quelconque des revendications 1 à 4, dans lequel le matériau de résine adhésif comporte une résine pouvant mousser qui mousse lorsqu'elle est chauffée, de sorte que les parties de renforcement (11, 21 ; 111, 121) vont être connectées par un produit en mousse (31 ; 136) après chauffage.

6. Dispositif selon l'une quelconque des revendications 1 à 5, dans lequel au moins l'une parmi la première partie de renforcement allongée (11 ; 111) et la seconde partie de renforcement (21 ; 121) comporte un matériau de résine synthétique, et dans lequel la surface d'appariement (15a, 17a ; 115a) s'étendant le long de l'axe longitudinal de la première partie de renforcement allongée (11 ; 111) et la surface d'appariement (25a, 27a ; 125a) s'étendant le long de l'axe longitudinal de la seconde partie de renforcement allongée (21 ; 121) comportent chacune des gorges (13, 23) ayant une circonférence d'ouverture qui est inférieure à une circonférence intérieure, de sorte que le matériau de résine adhésif va venir en prise avec une lèvre (23a) définie dans les gorges (13, 23).

7. Procédé pour renforcer un élément structurel creux (1), comportant les étapes suivantes :
mettre en adhérence au moins deux parties de renforcement allongées (11, 21 ; 111, 121) en utilisant un matériau de résine adhésif qui comporte une résine thermodurcissable, en formant ainsi un dispositif de renforcement intermédiaire (10' ; 110'),
disposer le dispositif de renforcement intermédiaire (10' ; 110') dans une cavité (6) définie dans l'élément structurel creux (10), et
appliquer une chaleur externe au dispositif de renforcement (10' ; 110') pour activer la résine,
au moins une des parties de renforcement allongée (11, 21 ; 111, 121) comportant un matériau de résine synthétique, le matériau de résine synthétique étant une résine thermodurcissable qui, lorsqu'elle est activée par la chaleur externe appliquée, forme un produit thermodurci (31 ; 136) qui fixe de manière sûre les parties de renforcement (11, 21 ; 111, 121),
**caractérisé en ce qu'**au moins une des parties de renforcement allongées (11, 21 ; 111, 121) comporte au moins deux parois supplémentaires (15, 25 ; 115, 125) définissant une partie creuse sensiblement enceinte dans la partie de renforcement, de manière à imprimer une résistance et une rigidité à la partie (11, 21 ; 111, 121).

8. Procédé selon la revendication 7, dans lequel le matériau de résine adhésif comporte une résine pouvant mousser qui mousse lorsqu'elle est chauffée, de sorte que les parties de renforcement (11, 21 ; 111, 121) sont fixées de manière sûre par un produit thermodurci en mousse (31 ; 136) après chauffage.
